# EUROPÄISCHE PATENTSCHRIFT

(11) **EP 3 296 710 B1**
(45) Veröffentlichungstag und Bekanntmachung des Hinweises auf die Patenterteilung: **16.10.2019**
(21) Anmeldenummer: 17175618.2
(22) Anmeldetag: 13.06.2017
(51) Int. Cl.: G01K 15/00

(54) **BLOCKKALIBRATOR ZUR KALIBRIERUNG EINES TEMPERATURSENSORS**
CALIBRATION BLOCK FOR CALIBRATING A TEMPERATURE SENSOR
ÉTALONNEUR À BLOC DESTINÉ À ÉTALONNER UNE SONDE DE TEMPÉRATURE

(30) Priorität: 19.09.2016 DE 102016117572
(43) Veröffentlichungstag der Anmeldung: 21.03.2018
(73) Patentinhaber: SIKA Dr.Siebert & Kühn GmbH & Co. KG., 34260 Kaufungen (DE)
(72) Erfinder: REHM-GUMBEL, Michael, 34305 Niedenstein (DE); FRIEDRICHS, René, 37075 Göttingen (DE)
(74) Vertreter: Patentanwälte Walther Hinz Bayer PartGmbB

(56) Entgegenhaltungen:
- WO-A1-2010/094332
- WO-A1-2011/129689
- CN-Y- 2 304 904

## Beschreibung

Die Erfindung betrifft einen Blockkalibrator zur Kalibrierung eines Temperatursensors mit einem Heizblock, an oder in dem wenigstens ein Heizmittel angeordnet ist, und wobei der Heizblock eine Aufnahmebohrung zur Aufnahme einer Kalibrierhülse aufweist, in der wenigstens ein durch einen Temperatursensor gebildeter Prüfling einsetzbar ist.

### STAND DER TECHNIK

Beispielsweise offenbart die DE 10 2008 034 361 B4 einen Blockkalibrator zur Kalibrierung eines Temperatursensors mit einem Heizblock, in dem Heizmittel angeordnet sind, um den Heizblock auf eine vorgegebene Temperatur zu bringen. Im Heizblock ist eine Aufnahmebohrung eingebracht, in die eine Kalibrierhülse eingesetzt werden kann, und die Kalibrierhülse besitzt eine Sensorbohrung, in die ein als Prüfling dienender Temperatursensor eingeführt werden kann.

Ein weiteres Beispiel eines Blockkalibrators offenbart die WO 2013/113683 A2. In einem Heizblock sind mehrere Sackbohrungen eingebracht, und in den Sackbohrungen sitzen sowohl Heizelemente, Thermometer als auch Wärmestromsensoren ein. Als Prüflinge sind Temperatursensoren geeignet, die in die Sackbohrungen eingesetzt werden können. Nachteilhafterweise besitzt der Blockkalibrator keine aus einer Aufnahmebohrung entnehmbare Kalibrierhülse, sodass nur einheitliche Gebrauchsthermometer kalibrierbar sind, die in die Vertiefungen passgenau eingesetzt werden können.

Bei der Verwendung von Kalibrierhülsen ergibt sich das Problem, dass diese bei einer Spiel- oder Übergangspassung nicht bei jeder Temperatur auf einfache Weise in die Aufnahmebohrung eingesetzt und aus dieser wieder entnommen werden können. Aufgrund von Wärmedehnungseffekten sowie von Oberflächenveränderungen der Aufnahmehülse oder beispielsweise auch der Aufnahmebohrung, etwa durch eine Verzunderung, kann es vorkommen, dass sich die Kalibrierhülse in der Aufnahmebohrung festsetzt. Ein Austausch der Kalibrierhülse zur Kalibration verschiedener Temperatursensoren, die jeweils den Prüfling bilden sollen, ist somit nicht mehr möglich.

Wird das Innenmaß der Aufnahmebohrung und das Außenmaß der Kalibrierhülse mit einem Passungsmaß ausgeführt, beispielsweise mit einer Spielpassung nach DIN 7157, so kann es vorkommen, dass die Kalibrierhülse einseitig an der Aufnahmebohrung zur Anlage gelangt, wodurch Inhomogenitäten der Temperaturverteilung im Heizblock auf eine Temperaturverteilung in der Kalibrierhülse übertragen werden. Dabei ist es jedoch wünschenswert, dass in der Kalibrierhülse eine homogene Temperatur vorherrscht, die sich insbesondere über den vollen Umfang der Kalibrierhülse ergibt.

Die CN 2 304 904 Y offenbart eine Anordnung einer Kalibrierhülse in einer Aufnahmebohrung eines Heizblocks mit einer konischen Ausgestaltung, um ein Verklemmen der Kalibrierhülse in der Aufnahmebohrung zu vermeiden, insbesondere bei starken Temperaturänderungen. Dabei wird angegeben, dass die Kalibrierhülse auf vereinfachte Weise in die Aufnahmebohrung eingeführt und aus dieser auch wieder entnommen werden kann, insbesondere ohne ein Verklemmen der Kalibrierhülse in der Aufnahmebohrung. Nachteilhafterweise ergibt sich durch die konische Anordnung jedoch ein im Wesentlichen vollumfänglicher Festkörperkontakt zwischen der Kalibrierhülse und der Aufnahmebohrung, sodass das Temperaturprofil im Heizblock unmittelbar übertragen wird auf den Umfang der Kalibrierhülse.

### OFFENBARUNG DER ERFINDUNG

Aufgabe der Erfindung ist die Verbesserung eines Blockkalibrators zur Kalibrierung eines Temperatursensors, bei dem ein Festsetzen der Kalibrierhülse in der Aufnahmebohrung vermieden wird und wobei erreicht werden soll, dass sich in der Kalibrierhülse eine möglichst homogene Temperatur ausbildet.

Diese Aufgabe wird ausgehend von einem Blockkalibrator gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zwischen einer Innenwandung der Aufnahmebohrung und einer Außenwandung der Kalibrierhülse wenigstens bereichsweise ein Luftspalt ausgebildet ist.

Ein Luftspalt zwischen der Außenwandung der Kalibrierhülse und der Innenwandung der Aufnahmebohrung im Sinne der Erfindung wird durch ein Spaltmaß gebildet, das größer ist als ein Mikrospalt, der sich bei einer Spielpassung oder einer Übergangspassung ergibt. Durch den Luftspalt wird erreicht, dass sich die Kalibrierhülse in der Aufnahmebohrung auch über einem weiten Temperaturbereich nicht mehr festsetzen kann, selbst wenn sich Oberflächenänderungen der Außenwandung der Kalibrierhülse oder der Innenwandung der Aufnahmebohrung ergeben. Außerdem wird erreicht, dass der Luftspalt keinen Festkörperkontakt zwischen der Außenwandung und der Innenwandung mehr zulässt, sodass auch keine einseitige erhöhte Temperatureinwirkung auf die Aufnahmehülse die Folge sein kann. Dadurch ergibt sich ein temperaturintegrierender Effekt zwischen Außenwandung und Innenwandung, sodass sich in der Kalibrierhülse über dem Umfang eine homogene Temperatur ausbilden kann, da diese in an sich bekannter Weise aus einem Material mit guter Wärmeleitung gebildet wird. Die Wärmeübertragung vom Heizblock auf die Kalibrierhülse erfolgt dabei im Wesentlichen über den Luftspalt, und unter Vermeidung eines Festkörperkontaktes zwischen der Kalibrierhülse und der Aufnahmebohrung im Bereich der Mantelfläche der Kalibrierhülse ermöglicht eine hohe Temperaturhomogenität innerhalb der Kalibrierhülse, auch wenn der Heizblock mit den Heizmitteln mit Bezug auf eine Längsachse der Kalibrierhülse asymmetrisch eingebracht wird.

Gemäß einer vorteilhaften Weiterbildung des erfindungsgemäßen Blockkalibrators ist wenigstens ein Zentriermittel vorgesehen, das eine Zentrierung der Kalibrierhülse in der Aufnahmebohrung schafft. Das Zentriermittel ist dabei so ausgebildet, dass sich wenigstens an der Setzstelle des Zentriermittels über dem gesamten Umfang der Kalibrierhülse ein gleichförmiger Luftspalt zwischen der Innenwandung der Aufnahmebohrung und der Außenwandung der Kalibrierhülse ergibt. Damit fällt die Rotationsachse der Kalibrierhülse mit der Mittelachse der Aufnahmebohrung zusammen. Insbesondere kann bei einer Handhabung des Blockkalibrators die Kalibrierhülse in der Aufnahmebohrung nicht mehr bewegt werden, sodass die Kalibrierhülse in der Aufnahmebohrung auch nicht mehr desachsieren kann.

Beispielsweise umschließt das Zentriermittel die Kalibrierhülse an einer Setzstelle vollumfänglich. Folglich kann das Zentriermittel entweder an der Kalibrierhülse haltend angeordnet sein, oder das Zentriermittel ist in der Aufnahmebohrung so eingesetzt, dass das Zentriermittel auch bei einem Einsetzen oder Entnehmen der Kalibrierhülse in der Aufnahmebohrung an der gewünschten Setzstelle verbleibt. Das Zentriermittel ist beispielsweise in einer Nut in der Außenwandung der Kalibrierhülse eingesetzt, oder das Zentriermittel ist in einer Nut eingesetzt, die in der Aufnahmebohrung eingebracht ist. Dabei kann beispielsweise nur ein Zentriermittel zur Zentrierung der Kalibrierhülse in der Aufnahmebohrung vorgesehen sein, insbesondere besteht auch die Möglichkeit, mehrere Zentriermittel vorzusehen, die entlang der Längsachse der Kalibrierhülse beabstandet zueinander angeordnet sind. Beispielsweise kann an einem oberen Ende der Kalibrierhülse, in dem stirnseitig wenigstens eine Sensorbohrung zur Aufnahme des Prüflings oder mehrerer Prüflinge vorhanden ist, das Zentriermittel angeordnet sein. Auch besteht die Möglichkeit, in einem Bodenbereich der Kalibrierhülse ein weiteres Zentriermittel vorzusehen. Insbesondere dann, wenn zwei möglichst zueinander beabstandete Zentriermittel zwischen der Kalibrierhülse und der Aufnahmebohrung angeordnet sind, kann eine zentrische Anordnung der Kalibrierhülse in der gesamten Aufnahmebohrung im Heizblock sichergestellt werden.

Ein Ausführungsbeispiel eines Zentriermittels kann beispielsweise mit einem O-Ring oder mit einem metallischen Federelement gebildet werden. Das Federelement kann dabei beispielsweise in einer Nut in der Außenwandung der Kalibrierhülse oder in einer Nut in der Innenwandung der Aufnahmebohrung eingesetzt sein. Ist das Zentriermittel als metallisches Federelement ausgebildet, beispielsweise als Schraubenfeder, und wird die Schraubenfeder in eine außenumfänglich umlaufende Nut in der Außenwandung der Kalibrierhülse eingesetzt, so kann die Schraubenfeder unter Spannung gesetzt werden. Damit ergibt sich eine gleichförmige Anordnung der Windungen der Schraubenfeder in Umfangsrichtung der Kalibrierhülse, und durch den gleichförmigen Windungsdurchmesser der Schraubenfeder wird die gewünschte zentrierte Anordnung der Kalibrierhülse in der Aufnahmebohrung sichergestellt.

Dabei können die Windungen der Schraubenfeder mit einem Umfangsabschnitt aus der Außenwandung der Kalibrierhülse hervorstehen und den Luftspalt überbrückend gegen die Innenwandung der Aufnahmebohrung abgestützt sein. Wird das Zentriermittel als O-Ring ausgeführt, so kann die Schnurdicke des O-Ringes größer sein als die Nuttiefe, sodass ebenfalls eine Zentrierwirkung der Kalibrierhülse in der Aufnahmebohrung erreicht wird.

Ein weiterer Vorteil wird erreicht, wenn der Luftspalt ein Spaltmaß aufweist, das größer ist als eine Spielpassung der Kalibrierhülse in der Aufnahmebohrung nach DIN 7157 und/oder dass der Luftspalt ein Spaltmaß aufweist, das größer ist als 0,5mm-2,5mm. Je größer der Luftspalt gewählt wird, desto schlechter ist der Wärmeübergang vom Heizblock auf die Kalibrierhülse, das heißt, dass die Soll-Temperatur in der Kalibrierhülse zeitverzögert erreicht wird. Wird das Spaltmaß klein ausgewählt, ergibt sich ein geringerer integrierender Effekt zur Vergleichmäßigung der Temperatur in der Kalibrierhülse. Optimale Spaltmaße zur Bildung des Luftspaltes betragen damit 0,5mm-2,5mm, die die Radiusdifferenz zwischen dem Radius der Kalibrierhülse und dem Radius der Aufnahmebohrung wiedergeben.

Eine weitere Vergleichmäßigung der Temperatur in der Kalibrierhülse insbesondere über den Umfangssegmenten um die Längsachse der Kalibrierhülse ergibt sich, wenn die Außenwandung der Kalibrierhülse abschnittsweise von einer Zylindermantelfläche abweichend ausgebildet ist. Die Abweichung kann dabei über Umfangssegmente um die Längsachse gebildet sein, oder die Abweichung wird entlang der Längsachse der Kalibrierhülse gebildet. Beispielsweise ist vorgesehen, dass in Längsachse der Kalibrierhülse ein Abschnitt in der Außenwandung mit einem verringerten Durchmesser ausgebildet ist. Der Abschnitt kann dabei so platziert werden, dass das durch den verringerten Durchmesser gebildete größere Spaltmaß des Luftspaltes nahe an den Heizmitteln erzeugt wird, da das Regionen sind, in denen der Heizblock am heißesten ist. in weniger heißen Regionen des Heizblocks weist der Luftspalt ein geringeres Spaltmaß auf, sodass in diesen Bereichen die Wärmeeinbringung in die Kalibrierhülse stärker ist. Im Ergebnis ergibt sich eine Homogenisierung der Temperaturverteilung in der Kalibrierhülse basierend auf unterschiedlichen Spaltmaßen des Luftspaltes über der Mantelfläche der Kalibrierhülse.

Ein weiteres Ausführungsbeispiel zur Bildung des Blockkalibrators sieht vor, dass die Kalibrierhülse erste Umfangssegmente mit einem geringeren Radius und zweite Umfangssegmente mit einem größeren Radius aufweisen. Weitere Umfangssegmente mit wiederum anderen Radien sind dabei ebenfalls denkbar. Die ersten Umfangssegmente mit dem geringeren Radius bewirken einen größeren Luftspalt und sind in den Bereichen vorgesehen, in denen die Heizmittel am Heizblock angeordnet sind. Quer dazu sind die zweiten Umfangssegmente in der Kalibrierhülse eingebracht, die einen geringeren Luftspalt und damit einen stärkeren Wärmeübergang vom Heizblock auf die Kalibrierhülse bewirken. Sind beispielsweise mehrere Heizmittel am Heizblock angeordnet, so können die Umfangssegmente mit den geringeren Radien grundsätzlich den Bereichen des Heizblocks gegenüberliegend ausgebildet sein, in denen die Heizmittel angeordnet sind.

Die Erfindung richtet sich weiterhin auf eine Kalibrierhülse für einen Blockkalibrator wie obenstehend beschrieben, wobei die Kalibrierhülse ein metallisches Federelement oder ein O-Ring als Zentriermittel aufweist, mittels dem die Kalibrierhülse zentriert in der Aufnahmebohrung des Heizblocks anordbar ist. Insbesondere können erste Umfangssegmente mit einem geringeren Radius und zweite Umfangssegmente mit einem größeren Radius in der Außenwandung der Kalibrierhülse ausgebildet sein.

### BEVORZUGTE AUSFÜHRUNGSBEISPIELE DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematisierte Querschnittsansicht durch einen Blockkalibrator.
- Fig. 2: ein Ausführungsbeispiel einer Kalibrierhülse mit einem erfindungsgemäßen Zentriermittel,
- Fig.3: die Kalibrierhülse mit einem Abschnitt in der Außenwandung, der einen verringerten Durchmesser aufweist,
- Fig. 4: eine schematisierte Draufsicht auf den Blockkalibrator mit einem gleichförmig umlaufenden geringeren Luftspalt,
- Fig. 5: die Draufsicht des Blockkalibrators gemäß Figur 4 mit einem größeren Luftspalt,
- Fig. 6: die Draufsicht auf den Blockkalibrator mit einer Kalibrierhülse, die Umfangssegmente mit unterschiedlichen Durchmessern auf weist und
- Fig.7: ein Diagramm der Temperatur über einem Umfangssegment von 90° der zylinderförmigen Kalibrierhülse mit verschiedenen Temperaturverläufen.

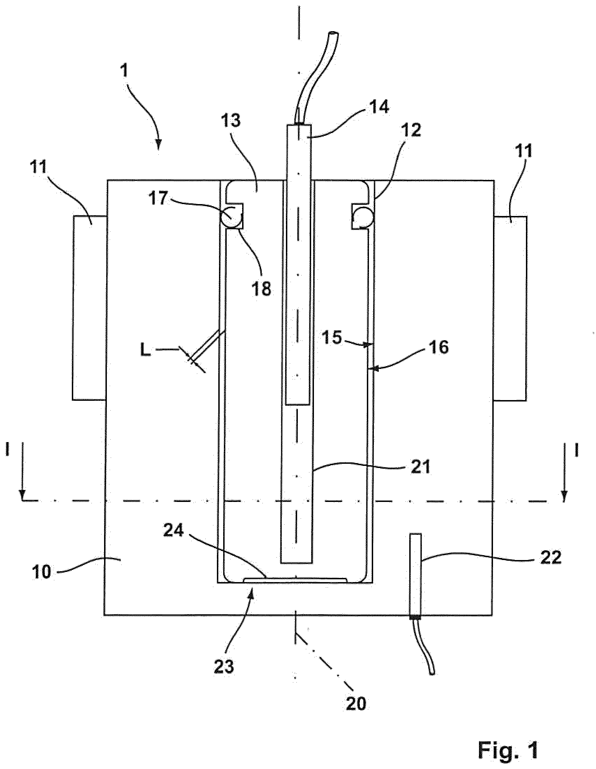

Figur 1 zeigt schematisch die Ansicht eines Blockkalibrators 1 in einem Querschnitt. Der Blockkalibrator 1 weist als Grundkörper einen Heizblock 10 auf, und in dem Heizblock 10 ist eine Aufnahmebohrung 12 eingebracht, in die eine Kalibrierhülse 13 eingesetzt werden kann. Die Aufnahmebohrung 12 impliziert dabei nicht die Herstellung mittels einem Bohrverfahren, sodass die Aufnahmebohrung 12 auf jede denkbare Weise in den Heizblock 10 eingebracht sein kann. Das Ausführungsbeispiel zeigt die Kalibrierhülse 13 in einer rotationssymmetrischen Form, die sich um eine Längsachse 20 erstreckt, wobei die Querschnittsform der Aufnahmebohrung 12 im gezeigten Ausführungsbeispiel einer kreisrunden Querschnittsform der Kalibrierhülse 13 angepasst ist. Innerhalb der Kalibrierhülse 13 ist eine Sensorbohrung 21 eingebracht, die sich konzentrisch zur Längsachse 20 erstreckt und in die ein Prüfling 14 in Form eines Temperatursensors eingeführt werden kann. Die Abbildung zeigt beispielhaft nur eine Sensorbohrung 21, wobei auch mehrere Sensorbohrungen 21 in nur einer Kalibrierhülse 13 eingebracht sein können.

Außenseitig am Heizblock 10 sind beispielhaft zwei Heizmittel 11 angebracht, die durch Peltier-Elemente ausgebildet sein können. Mit den Heizmitteln 11 besteht die Möglichkeit, den Heizblock 10 aufzuheizen, wobei auch denkbar ist, dass mit den Heizmitteln 11 eine Kühlung des Heizblocks 10 stattfinden kann, insbesondere dann, wenn die Heizmittel 11 als Peltier-Elemente ausgebildet sind.

Auf der Unterseite befindet sich eine weitere Sacklochbohrung im Heizblock 10, in der ein Referenzsensor 22 eingesetzt ist. Mit dem Referenzsensor 22 ist eine Temperatur des Heizblocks 10 bestimmbar.

Die Kalibrierhülse 13 ist im Heizblock 10 austauschbar eingesetzt, wofür die Aufnahmebohrung 12 zur Oberseite des Heizblocks 10 hin offen ausgeführt ist, sodass die Aufnahmebohrung 12 ein weiteres Sackloch im Heizblock 10 bildet. Ebenfalls von der Oberseite kann der Prüfling 14 in die Kalibrierhülse 13 eingeführt und aus dieser auch wieder entnommen werden. Die Kalibrierhülse 13 dient dabei unter anderem zur Aufnahme verschiedener Prüflinge 14, die unterschiedliche Durchmesser aufweisen können. Darüber besteht die Möglichkeit, eine für einen Prüfling 14 passende Kalibrierhülse 13 auszuwählen und in die Aufnahmebohrung 12 einzusetzen.

Als Kernmerkmal des erfindungsgemäßen Blockkalibrators 1 ist zwischen einer Innenwandung 15 der Aufnahmebohrung 12 und einer Außenwandung 16 der Kalibrierhülse 13 ein Luftspalt L ausgebildet. Das Ausführungsbeispiel zeigt den Luftspalt L gleichförmig über der Umfangsfläche der Kalibrierhülse 13 und weist ein Spaltmaß von 0,5 mm - 2,5mm auf. Durch den vorgesehenen Luftspalt L erfolgt ein Wärmeeintrag vom Heizblock 10 in die Kalibrierhülse 13 über den Luftspalt L, wodurch sich eine Vergleichmäßigung der Temperatur in der Kalibrierhülse 13 ergibt. Durch den wenigstens über der Mantelfläche der Kalibrierhülse 13 vermiedenen Festkörperkontakt mit dem Heizblock 10 entstehen keine Bereiche verstärkter Wärmeeinbringung, und es kann sich aufgrund der Wärmeleitung des Materials der Kalibrierhülse 13 ohne wesentliche Beeinflussung des Heizblocks 10 eine Vergleichmäßigung der Wärme über jedem Umfangssegment um die Längsachse 20 in der Kalibrierhülse 13 einstellen. Um den Festkörperkontakt des Hülsenbodens 23 mit der Bodenseite der Aufnahmebohrung 12 im Heizblock 10 zu minimieren, weist die Kalibrierhülse 13 in der Bodenfläche eine Freimachung 24 auf. Im Ergebnis verbleibt lediglich ein außenseitiger Ringkontakt des Hülsenbodens 23 gegen den Boden der Aufnahmebohrung 12 dem Heizblock 10.

Um eine Zentrierung der Kalibrierhülse 13 in der Aufnahmebohrung 12 zu schaffen, weist die Anordnung der Kalibrierhülse 13 im Heizblock 10 ein Zentriermittel 17 auf. Das Zentriermittel 17 ist beispielhaft ausgeführt als Federelement 19 in Gestalt einer Schraubenfeder, die in einer umlaufenden Nut 18 eingebracht ist, wobei die Nut 18 im oberen Bereich der Mantelfläche der Kalibrierhülse 13 eingebracht ist. In nicht gezeigter Weise besteht die Möglichkeit, ein weiteres Zentriermittel 17 beispielsweise nahe zum Hülsenboden 23 in die Mantelfläche der Kalibrierhülse 13 einzubringen, insbesondere ist es vorteilhaft, ein weiteres Zentriermittel 17 in der Innenwandung 15 der Aufnahmebohrung 12 im unteren Bereich der Sacklochbohrung anzuordnen.

Das Zentriermittel 17 bewirkt eine konzentrische Anordnung der Kalibrierhülse 13 in der Aufnahmebohrung 12, sodass die Mittelachse der Aufnahmebohrung 12 und die Längsachse 20 der Kalibrierhülse 13 ineinander liegen.

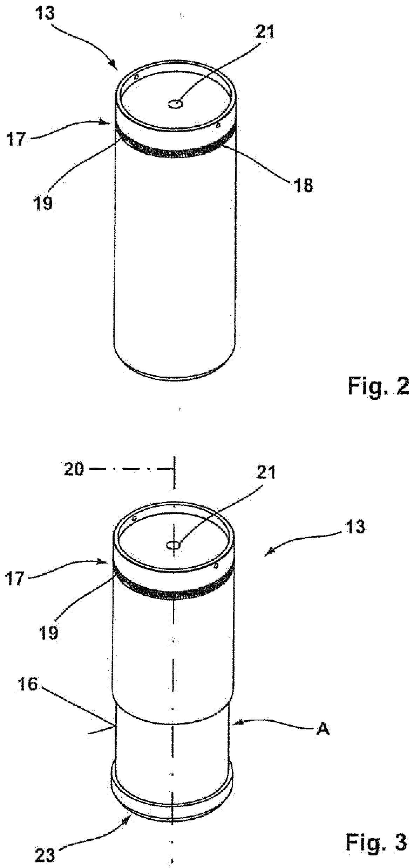

Figur 2 zeigt ein Beispiel der Kalibrierhülse 13 mit einem Zentriermittel 17 in Form des Federelementes 19, das in der umlaufenden Nut 18 in der Mantelfläche der Kalibrierhülse 13 eingebracht ist. Das Zentriermittel 17 befindet sich am oberen Ende der Kalibrierhülse 13 angrenzend an die Stirnfläche, in der beispielhaft nur eine Sensorbohrung 21 zum Einsetzen des Prüflings 14 eingebracht ist.

Figur 3 zeigt ein Ausführungsbeispiel der Kalibrierhülse 13 mit dem Zentriermittel 17 in Gestalt des Federelementes 19 im oberen Bereich der Kalibrierhülse 13 angrenzend an die Stirnfläche, in der die Sensorbohrung 21 eingebracht ist.

In Richtung zum Hülsenboden 23 weisend erstreckt sich entlang der Längsachse 20 in der Außenumfangsfläche der Kalibrierhülse 13 ein Abschnitt A mit einem verringerten Durchmesser in der Außenwandung 16. Durch die damit einhergehende Vergrößerung des in Figur 1 dargestellten Luftspaltes L wird der Wärmeeintrag in den Abschnitt A vom Heizblock 10 in die Kalibrierhülse 13 weiter abgeschwächt. Damit kann entlang der Längsachse 20 in der Kalibrierhülse 13 ein gewünschtes Temperaturprofil aufgeprägt werden, insbesondere zur Vergleichmäßigung der Temperatur über der Länge der Längsachse 20.

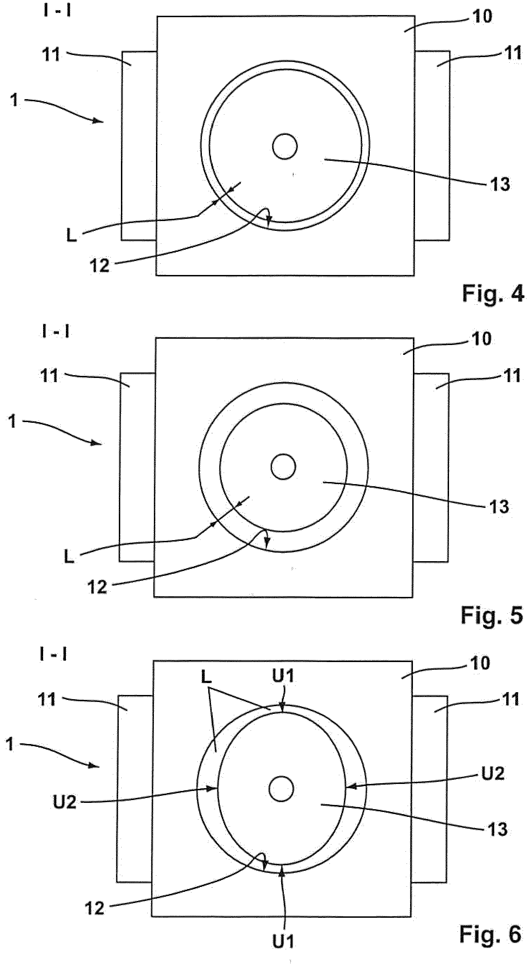

Die Figuren 4, 5 und 6 zeigen gemäß der Schnittansicht I.I in Figur 1 jeweils eine Draufsicht auf den Blockkalibrator 1 mit dem Heizblock 10, mit den Heizelementen 11 in seitlicher Anordnung am Heizblock 10 und mit der Aufnahmebohrung 12, die zentrisch im Heizblock 10 eingebracht ist. Der Heizblock 10 weist dabei einen rechteckigen Querschnitt auf.

In der Aufnahmebohrung 12 ist die Kalibrierhülse 13 eingebracht, und umlaufend zwischen der Kalibrierhülse 13 und der Aufnahmebohrung 12 befindet sich der Luftspalt L. Figur 4 zeigt dabei einen kleinen Luftspalt L mit beispielsweise einem Spaltmaß von 0,5mm. Figur 5 zeigt den Luftspalt L mit einem Spaltmaß von beispielsweise 2,5mm.

Figur 6 zeigt eine Kalibrierhülse 13 mit einer Form, die von einer Zylinderform abweicht. Dadurch weist die Kalibrierhülse 13 erste Umfangssegmente U1 mit einem größeren Durchmesser auf, und die Kalibrierhülse 13 weist zweite Umfangssegmente U2 mit einem kleineren Durchmesser auf.

In den ersten Umfangssegmenten U1 ergibt sich ein kleineres Spaltmaß von beispielsweise nur 0,5mm, und in den zweiten Umfangssegmenten U2 mit dem kleineren Durchmesser der Kalibrierhülse 13 ergibt sich ein größeres Spaltmaß des Luftspaltes L von beispielsweise 2,5mm.

Durch diese Ausgestaltung der Kalibrierhülse wird ein geringerer Wärmeübergang in den seitlichen Bereichen der zweiten Umfangssegmente U2 erzeugt, die mit den Bereichen korrespondieren, in denen außenseitig die Heizmittel 11 am Heizblock 10 aufgebracht sind. Durch das sich damit ergebende Inhomogene Temperaturprofil im Heizblock 10 und den größeren und kleineren Luftspalten L ergibt sich in der Kalibrierhülse 13:IM Ergebnis ein vollumfänglich ausgeglichenes Temperaturprofil.

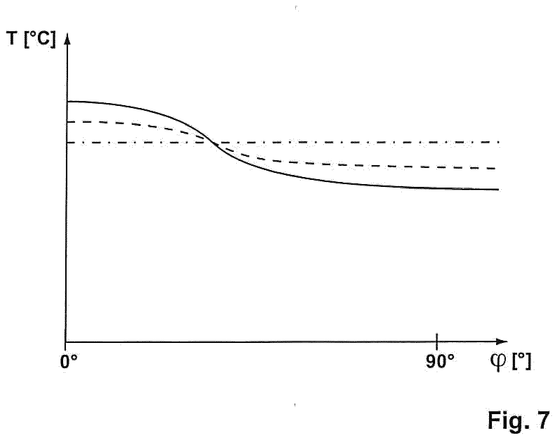

Figur 7 zeigt in einer diagrammatischen Darstellung einen Verlauf der Temperatur T über einem Winkel ϕ von 0° - 90°, wodurch ein Segment der Kalibrierhülse 13 wiedergegeben ist, der einem Viertel der Querschnittsfläche entspricht, wobei im Winkel von 0° die Heizelemente 11 angeordnet sind und der Winkel von 90° gibt den Rand des Segmentes quer zur Anordnung der Heizelemente 11 wieder.

Mit Bezug auf Figur 6 fällt bei einem Winkel ϕ von 0° der Luftspalt sehr groß aus, und bei einem Winkel ϕ von 90° ist der Luftspalt klein ausgebildet. Folglich korrespondiert der Winkel ϕ von 0° mit dem zweiten Umfangssegment U2, und der Winkel von 90° korrespondlert mit dem ersten Umfangssegment U1 in Verbindung mit Figur 6.

Der durchgezogene Graph repräsentiert die sich ändernde Temperatur über dem Winkel von 0° - 90°, der gemäß Figur 4 dann entsteht, wenn vollumfänglich ein kleiner Luftspalt L zwischen der Aufnahmebohrung 12 und der Kalibrierhülse 13ausgebildet ist. Der gestrichelte Graph gibt das Temperaturprofil über dem 90°-Segment gemäß Figur 5 wieder, in der der Luftspalt L bereits größer ausgebildet ist. Die strichpunktierte Linie gibt das Temperaturprofil in der Kalibrierhülse 13 über einem 90° Segment mit den ausgebildeten Umfangssegmenten U1 und U2 in der Kalibrierhülse 13 wieder. Die Temperaturverläufe zeigen dabei, dass durch eine Vergrößerung des Luftspaltes zunächst eine Vergleichmäßigung der Temperatur in der Kallbrierhülse 13 erzeugbar ist, und werden die Umfangssegmente U1 und U2 mit entsprechenden Radien In der Kalibrierhülse 13 so angepasst, dass ein schwächerer Wärmeübergang in heißeren Zonen des Heizblocks 10 erzeugt wird, so kann das Temperaturprofil in der Kalibrierhülse 13 im Wesentlichen vollständig vergleichmäßigt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Blockkalibrator

- 10: Heizblock
- 11: Heizmittel
- 12: Aufnahmebohrung
- 13: Kalibrierhülse
- 14: Prüfling
- 15: Innenwandung
- 16: Außenwandung
- 17: Zentriermittel
- 18: umlaufende Nut
- 19: Federelement
- 20: Längsachse
- 21: Sensorbohrung
- 22: Referenzsensor
- 23: Hülsenboden
- 24: Freimachung

- L: Luftspalt
- A: Abschnitt mit verringertem Durchmesser
- U1: erstes Umfangssegment
- U2: zweites Umfangssegment

## Patentansprüche

1. Blockkalibrator (1) zur Kalibrierung eines Temperatursensors mit einem Heizblock (10), an oder in dem wenigstens ein Heizmittel (11) angeordnet ist, wobei der Heizblock (10) eine Aufnahmebohrung (12) aufweist, in der eine Kalibrierhülse (13)aufgenommen ist und wobei in der Kallbrierhülse (13) wenigstens ein durch einen Temperatursensor gebildeter Prüfling (14) einsetzbar Ist,
**dadurch gekennzeichnet,**
**dass** zwischen einer Innenwandung (15) der Aufnahmebohrung (12) und einer Außenwandung (16) der Kalibrierhülse (13) wenigstens bereichsweise ein Luftspalt (L) mit einem Spaltmaß ausgebildet ist, das einen Wert von 0,5mm bis 2,5mm aufweist.

2. Blockkalibrator (1) nach Anspruch 1,
**dadurch gekennzeichnet,**
**dass** wenigstens ein Zentriermittel (17) vorgesehen ist, das eine Zentrierung der Kalibrierhülse (13) in der Aufnahmebohrung (12) schafft.

3. Blockkalibrator (1) nach Anspruch 2,
**dadurch gekennzeichnet,**
**dass** das Zentriermittel (17) die Kalibrierhülse (13) an einer Setzstelle vollumfänglich umschließt.

4. Blockkalibrator (1) nach einem der Ansprüche 2 bis 3,
**dadurch gekennzeichnet,**
**dass** das Zentriermittel (17) in der Aufnahmebohrung (12) und/oder an der Kalibrierhülse (13) haltend angeordnet ist.

5. Blockkalibrator (1) nach einem der Ansprüche 2 bis 4,
**dadurch gekennzeichnet,**
**dass** die Kalibrierhülse (13) in der Außenwandung (16) eine umlaufende Nut (18) aufweist, in der das Zentriermittel (17) angeordnet ist.

6. Blockkalibrator (1) nach einem der Ansprüche 2 bis 5,
**dadurch gekennzeichnet,**
**dass** das Zentriermittel (17) mittels eines O-Rings gebildet ist.

7. Blockkalibrator (1) nach einem der Ansprüche 2 bis 6,
**dadurch gekennzeichnet,**
**dass** das Zentriermittel (17) mittels eines metallischen Federelementes (19) gebildet ist.

8. Blockkalibrator (1) nach Anspruch 7,
**dadurch gekennzeichnet,**
**dass** das Federelement (19) In der Nut (18) eingesetzt ist.

9. Blockkalibrator (1) nach Anspruch 7 oder 8,
**dadurch gekennzeichnet,**
**dass** das Federelement (19) eine Schraubenfeder ist, wobei die Windungen der Schraubenfeder mit einem Umfangsabschnitt aus der Außenwandung (16) der Kalibrierhülse (13) hervorstehen und den Luftspalt (L) überbrückend gegen die Innenwandung (15) der Aufnahmebohrung (12) abstützbar sind.

10. Biockkalibrator (1) nach einem der vorgenannten Ansprüche,
**dadurch gekennzeichnet,**
**dass** die Außenwandung (16) abschnittsweise von einer Zylindermantelfläche abweichend ausgebildet ist.

11. Blockkalibrator (1) nach Anspruch 10,
**dadurch gekennzeichnet,**
**dass** in Längsachse (20) der Kalibrierhülse (13) ein Abschnitt (A) in der Außenwandung (16) mit einem verringerten Durchmesser ausgebildet

12. Blockkalibrator (1) nach Anspruch 10 oder 11,
**dadurch gekennzeichnet,**
**dass** die Kalibrierhülse (13) erste Umfangssegmente (U1) mit einem geringeren Radius und zweite Umfangssegmente (U2) mit einem größeren Radius aufweisen.

13. Kalibrierhülse (13) für einen Blockkalibrator (1) nach einem der vorgenannten Ansprüche,
**dadurch gekennzeichnet,**
**dass** die Kalibrierhülse (13) ein metallisches Federelement (19) oder einen O-Ring als Zentriermittel (17) aufweist, mittels dem die Kalibrierhülse (13) zentriert in der Aufnahmebohrung (12) des Heizblocks (10) anordbar

14. Kalibrierhülse (13) nach Anspruch 13,
**dadurch gekennzeichnet,**
**dass** erste Umfangssegmente (U1) mit einem geringeren Radius und zweite Umfangssegmente (U2) mit einem größeren Radius in der Außenwandung (16) ausgebildet sind.

## Claims

1. A block calibrator (1) for calibrating a temperature sensor with a heating block (10), on which or in which at least one heating appliance (11) is disposed, wherein the heating block (10) features a receiving bore (12), inside which a calibration sleeve (13) is received, and wherein at least one test object (14) formed by a temperature sensor can be inserted in the calibration sleeve (13),
**characterized in that**
an air gap (L) with a gap dimension, which has a value of 0.5 mm to 2.5 mm, is formed at least in certain areas between an internal wall (15) of the receiving bore (12) and an external wall (16) of the calibration sleeve (13).

2. The block calibrator (1) according to claim 1,
**characterized in that**
at least one centring means (17) is provided, which provides a centring of the calibration sleeve (13) in the receiving bore (12).

3. The block calibrator (1) according to claim 2,
**characterized in that**
the centring means (17) completely surrounds the calibration sleeve (13) at a placement position.

4. The block calibrator (1) according to one of the claims 2 to 3,
**characterized in that**
the centring means (17) is disposed so that it holds in the receiving bore (12) and/or onto the calibration sleeve (13).

5. The block calibrator (1) according to one of the claims 2 to 4,
**characterized in that**
the calibration sleeve (13) comprises a circumferential groove (18) in the external wall (16), in which the centring means (17) is disposed.

6. The block calibrator (1) according to one of the claims 2 to 5,
**characterized in that**
the centring means (17) is formed by means of an O-ring.

7. The block calibrator (1) according to one of the claims 2 to 6,
**characterized in that**
the centring means (17) is formed by means of a metallic spring element (19).

8. The block calibrator (1) according to claim 7,
**characterized in that**
the spring element (19) is inserted in the groove (18).

9. The block calibrator (1) according to claim 7 or 8,
**characterized in that**
the spring element (19) is a coil spring, wherein the windings of the coil spring protrude with a section of the circumference out of the external wall (16) of the calibration sleeve (13) and, while bridging the air gap (L), can be supported by the internal wall (15) of the receiving bore (12).

10. The block calibrator (1) according to one of the afore-mentioned claims,
**characterized in that**
the external wall (16) is formed so that it deviates, in sections, from a cylinder lateral surface.

11. The block calibrator (1) according to claim 10,
**characterized in that**
a section (A) is formed with a reduced diameter in the external wall (16) along the longitudinal axis (20) of the calibration sleeve (13).

12. The block calibrator (1) according to claim 10 or 11,
**characterized in that**
the calibration sleeve (13) comprises first circumferential segments (U1) with a smaller diameter and second circumferential segments (U2) with a greater diameter.

13. A calibration sleeve (13) for a block calibrator (1) according to one of the afore-mentioned claims,
**characterized in that**
the calibration sleeve (13) comprises a metallic spring element (19) or an O-ring as a centring means (17), by means of which the calibration sleeve (13) can be disposed in a centred manner in the receiving bore (12) of the heating block (10).

14. The calibration sleeve (13) according to claim 13,
**characterized in that**
first circumferential segments (U1) with a smaller radius and second circumferential segments (U2) with a greater radius are formed in the external wall (16).

## Revendications

1. Four d'étalonnage (1) pour l'étalonnage d'un capteur de température avec un bloc de chauffage (10) au niveau duquel ou dans lequel est disposé au moins un moyen de chauffage (11), où le bloc de chauffage (10) comporte un alésage de réception (12) dans lequel est reçu un manchon d'étalonnage (13) et où au moins une unité sous test (14) représentée par un capteur de température est insérable dans le manchon d'étalonnage (13),
**caractérisé en ce que**
un interstice d'air (L) avec une dimension d'interstice ayant une valeur de 0,5 mm à 2,5 mm est formé, au moins par endroits, entre une paroi intérieure (15) de l'alésage de réception (12) et une paroi extérieure (16) du manchon d'étalonnage (13).

2. Four d'étalonnage (1) selon la revendication 1,
**caractérisé en ce qu'**
au moins moyen de centrage (17) qui permet un centrage du manchon d'étalonnage (13) dans l'alésage de réception (12) est prévu.

3. Four d'étalonnage (1) selon la revendication 2,
**caractérisé en ce que**
le moyen de centrage (17) entoure le manchon d'étalonnage (13) sur toute sa circonférence en son lieu de positionnement.

4. Four d'étalonnage (1) selon l'une des revendications 2 à 3,
**caractérisé en ce que**
le moyen de centrage (17) est disposé de manière à se maintenir dans l'alésage de réception (12) et/ou au niveau du manchon d'étalonnage (13).

5. Four d'étalonnage (1) selon l'une des revendications 2 à 4,
**caractérisé en ce que**
le manchon d'étalonnage (13) comporte, dans la paroi extérieure (16), une rainure circonférentielle (18), dans laquelle est disposé le moyen de centrage (17).

6. Four d'étalonnage (1) selon l'une des revendications 2 à 5,
**caractérisé en ce que**
le moyen de centrage (17) est formé au moyen d'un joint torique.

7. Four d'étalonnage (1) selon l'une des revendications 2 à 6,
**caractérisé en ce que**
le moyen de centrage (17) est formé au moyen d'un élément ressort (19) métallique.

8. Four d'étalonnage (1) selon la revendication 7,
**caractérisé en ce que**
l'élément ressort (19) est inséré dans la rainure (18).

9. Four d'étalonnage (1) selon la revendication 7 ou 8,
**caractérisé en ce que**
l'élément ressort (19) est un ressort hélicoïdal, où les spires du ressort hélicoïdal font saillie avec une partie périphérique hors de la paroi extérieure (16) du manchon d'étalonnage (13) et peuvent s'appuyer sur la paroi intérieure (15) de l'alésage de réception (12) en enjambant l'interstice d'air (12).

10. Four d'étalonnage (1) selon l'une des revendications précédentes,
**caractérisé en ce que**
la paroi extérieure (16) est formée de telle manière qu'elle s'écarte par sections d'une enveloppe cylindrique.

11. Four d'étalonnage (1) selon la revendication 10,
**caractérisé en ce que**
le long de l'axe longitudinal (20) du manchon d'étalonnage (13) une section (A) dans la paroi extérieure (16) est réalisée avec un diamètre réduit.

12. Four d'étalonnage (1) selon la revendication 10 ou 11,
**caractérisé en ce que**
le manchon d'étalonnage (13) comporte des premiers segments périphériques (U1) de rayon plus petit et des seconds segments périphériques (U2) de rayon plus grand.

13. Manchon d'étalonnage (13) pour un four d'étalonnage (1) selon l'une des revendications précédentes,
**caractérisé en ce que**
le manchon d'étalonnage (13) comporte un élément ressort (19) métallique ou un joint torique en tant que moyen de centrage (17), au moyen duquel le manchon d'étalonnage (13) peut être disposé de manière centrée dans l'alésage de réception (12) du bloc chauffant (10).

14. Manchon d'étalonnage (13) selon la revendication 13,
**caractérisé en ce que**
des premiers segments périphériques (U1) de rayon plus petit et des seconds segments périphériques (U2) de rayon plus grand sont formés dans la paroi extérieure (16).
